# DEMANDE DE BREVET EUROPEEN

(11) **EP 1 365 171 A2**
(43) Date de publication de la demande: **26.11.2003**
(21) Numéro de dépôt: 03011429.2
(22) Date de dépôt: 20.05.2003
(51) Int. Cl.: F16H 1/16, B28C 5/26

(54) **Réducteur de transmission mécanique à vis sans fin pour bétonnière**

(30) Priorité: 20.05.2002 PT 10278002
(71) Demandeur: Irmaos Barros, S.A., 3810-568 Nariz, Aveiro (PT)
(72) Inventeur: Da Silva Barros, Carlos Amadeu, 3810-568 Nariz, Aveiro (PT)
(74) Mandataire: Pelayo de Sousa Henriques, Rui

(57) **Abrégé**

La présente invention a pour objet un réducteur mécanique de transmission de mouvement, notamment un réducteur du type vis sans fin/roue à denture creuse, ainsi que son application, notamment sur une bétonnière.

Le réducteur (35) comprend un corps (36), une vis sans fin (38) et une roue à denture creuse (39) et se caractérise par ne posséder, lui-même, aucun arbre ou roulement ou palier, l'arbre (31) de support de la vis sans fin étant l'arbre du moteur (30) et l'arbre de la roue à denture creuse (39) étant l'arbre (40) de l'organe extérieur à actionner (4). La roue à denture creuse (39) n'est pas supportée sur le corps (36) et celui-ci n'est pourvu que d'un point d'appui pour un roulement (34) d'appui de l'arbre du moteur/vis sans fin (31,38). Le corps (36) est ouvert du côté de ladite roue à denture creuse (39) et le support (42) de l'arbre (40) de l'organe extérieur à actionner (4) sert de couvercle au corps (36) mentionné, en étanchant le réducteur (35). La bétonnière (1) a un réducteur (35) monté sur la partie centrale de son bras basculant (3) et directement lié à l'arbre (40) de la cuve (4), et peut avoir un autre réducteur (35) pour la transmission du mouvement de basculement dudit bras de support (3) de la cuve (4).

## Description

### Objet de l'invention

La présente invention se rapporte à un réducteur mécanique de transmission de mouvement, notamment à un réducteur du type vis sans fin/roue à denture creuse.

Malgré le fait que le réducteur, selon l'invention, puisse, d'une façon générale, être appliqué sur des plusieurs appareils distincts, il vise particulièrement l'application sur des bétonnières, sa conception ayant eu lieu de la nécessité de concevoir un réducteur pour une bétonnière. Alors, l'application sur les bétonnières des réducteurs selon l'invention intègre aussi l'invention.

### Arrière-plan technologique

### i) Réducteurs

Les réducteurs mécaniques de transmission de mouvement sont des appareils qui permettent de transformer un mouvement d'un composant mécanique (par exemple, un arbre), dans un mouvement d'un autre composant mécanique (par exemple, un autre arbre). Traditionnellement, ils sont employés pour convertir un mouvement de rotation dans un autre mouvement de rotation de vélocité angulaire inférieur, ces mouvements de rotation arrivant soit autour d'un axe, soit autour d'axes parallèles, soit autour d'axes obliques, soit encore autour d'axes orthogonaux. Ils sont des appareils mécaniques de transmission de mouvement qui trouvent très fréquemment leur application dans la comptabilisation des vélocités des organes moteurs (généralement élevées) au rapport aux vélocités plus basses requises par d'autres organes dans certains appareils.

D'entre plusieurs types de réducteurs auxquels les mouvements de rotation dans l'arbre d'entrée et dans l'arbre de sortie arrivent sur des axes orthogonaux, ils sont connus des réducteurs qui utilisent une vis sans fin et une roue à denture creuse. Par chaque tour complète de la vis sans fin, la roue dentée avance un dent et, par conséquent, le rapport entre la vélocité d'entrée et la vélocité de sortie est égal au nombre des dents de la roue à denture creuse.

Traditionnellement, ces réducteurs sont constitués d'un corps extérieur avec les liaisons d'entrée et de sortie effectuées au moyen d'arbres permettant d'être assemblés au moyen de liaisons extérieures à l'organe moteur et à l'organe extérieur à mouvementer. Autant la vis sans fin que la roue à denture creuse sont supportées dans le corps du réducteur au moyen de roulements ou de paliers d'appui afin de permettre l'alignement convenable de la vis sans fin et de la roue à denture creuse. Ces réducteurs disposent d'un couvercle à l'area de la roue dentée et d'un autre à l'area d'entrée de la vis sans fin, ces couvercles effectuant la clôture de tout le système.

### ii) Bétonnières

Les bétonnières sont des appareils qui permettent de préparer le béton, au moyen d'un mélange de leurs composants dans une cuve qui, pour l'effet, est mise à tourner, autour de son axe.

Particulièrement généralisées, notamment dans les travaux de construction civile de dimension intermédiaire - où il n'est pas rentable d'installer une centrale à béton, mais où la préparation manuelle est aussi complètement exclue en face des quantités déjà significatives de béton à préparer - ce sont les bétonnières mobiles, c'est-à-dire, bétonnières dont la cuve et les respectifs moyens d'actionnement se trouvent installés sur un bâti mobile, normalement doté de deux roues coaxiales, dans une extrémité, et d'un pieds d'appui, dans l'extrémité inverse.

Les bétonnières mobiles classiques disposent d'une configuration générale très typique, dont on remarque la couronne périmétrique dont la cuve est dotée extérieurement et qui est actionnée par un pignon moteur supporté par le bâti de la bétonnière, celui-ci supportant également un bras basculant en forme de "U" qui supporte la cuve, celle-ci étant fixée par son fond à celui-là, mais restant libre pour tourner autour de son axe quant elle est poussée par la respective couronne par l'action dudit pignon. Par l'action d'un volant qui actionne un ensemble de roues dentées, ce bras est mouvementé selon un mouvement basculant, en entraînant l'abaissement de l'embouchure de la cuve afin de faciliter le chargement de celle-ci ou de provoquer son déchargement par gravité, conforme le moindre ou le plus grand degré de basculement, respectivement, c'est-à-dire, le moindre ou le plus grand angle du mouvement basculant.

Ce type de bétonnières correspond, dans l'essentiel, à la bétonnière décrite à US55118198.

De même, dans la demande d'enregistrement du modèle d'utilité décrit à FR2752391 A3 (avec priorité de 1996) on trouve une description détaillée des bétonnières mobiles classiques (voyez: feuille 1, ligne 3 jusqu'à la feuille 2, ligne 3, de la respective description), ainsi qu'une description des respectifs inconvénients (voyez: feuille 2, ligne 4 jusqu'à la feuille 3, ligne 23 de la même description), comme l'haut bruit provoqué, notamment par l'engrenage extérieur du pignon avec la couronne, les problèmes de sécurité relatifs à cet engrenage extérieur, ainsi que les problèmes d'encombrement arrivés. Selon la description y concernée, les inconvénients mentionnés seraient éliminés ou diminués en utilisant, d'un côté, un réducteur assemblé directement à la cuve et supporté sur le bras basculant et, d'autre côté, un réducteur de roue à denture creuse-vis sans fin pour le basculement dudit bras (et da la cuve correspondante) avec l'actionnement manuel (au moyen d'une manivelle) ou avec l'actionnement motorisé. Il est prévu un réducteur (R) à engrenages à bain d'huile pour l'actionnement de la cuve, lequel est vissé sur le bras basculant et actionne la cuve au moyen d'un arbre de sortie en forme conique qui se dépose sur un siège correspondant existant au fond de la cuve est qui est vissée au bout de cet arbre. De préférence (voyez: feuille 7, lignes 7 jusqu'à 9, de la description), le réducteur (R) sera du type décrit dans la demande de brevet italien ITFI95 A 30. Ce réducteur comprend deux pairs d'engrenages, étant doté d'un arbre intermédiaire placé entre l'arbre d'entrée et l'arbre de sortie, étant cet arbre intermédiaire, au moins, supporté à l'intérieur du corps du réducteur.

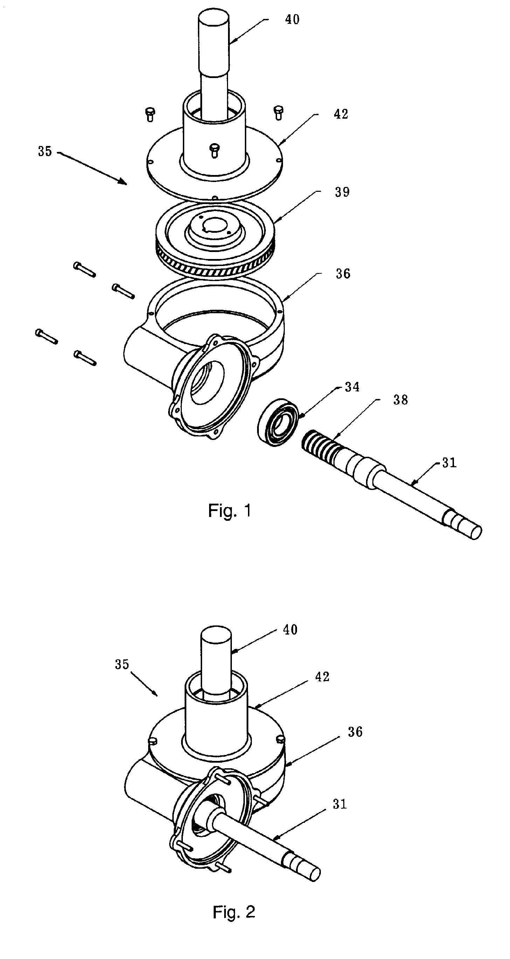

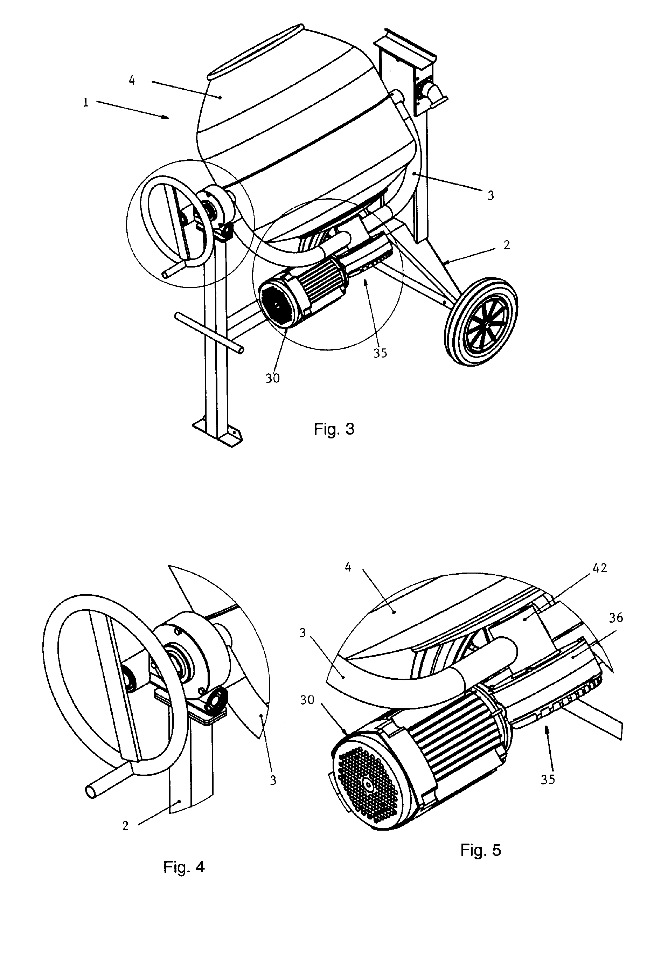

De plus, l'abordage d'inclure l'organe moteur dans le bras basculant, afin d'éliminer la dite couronne, était déjà connu antérieurement (au moins depuis 1990), étant référée à propos de la définition de l'arrière-plan technologique comme décrit au brevet US5190372. Le problème technique y concerné se rapportait surtout à l'adoption d'une solution qui permettait d'éviter le placement du moteur sur le bras basculant du côté contraire à celui de la cuve, en évitant de cette façon le risque de choc accidentel, au moment du mouvement de basculement du bras, des éléments de l'organe moteur contre un chariot placé sous la cuve, en se lésant (voyez: colonne 1, lignes 25 jusqu'à 31). La solution de ce problème se faisait soit par l'application de l'organe moteur à l'intérieur de la cuve (voyez: figure 3), soit par le placement de l'organe moteur sur le bras basculant, mais placé vers le côté de la cuve (voyez: figure 2), en utilisant une transmission par courroie. Dans les deux cas, la transmission prévoyait un réducteur placé dans la cuve, ayant ce réducteur une transmission épicycloïdale et en particulier planocentrique (voyez colonne 2, lignes 14 jusqu'à 22).

Malgré le fait que la déposante dudit modèle d'utilité français ne se rapporte pas, dans le document correspondant; à ce problème, elle l'a eut, certainement, en considération, car on vérifie que postérieurement elle a déposé le modèle d'utilité publié sous FR2803557 (avec priorité de 2000), lequel a suivi une philosophie pareille à celle dudit brevet américain US5190372, sauf en ce qui concerne la circonstance que le réducteur n'est pas partiellement placé dans le tambour, certes afin d'éviter un des inconvénients du dispositif de ce même brevet US5190372, c'est-à-dire, le gaspillage du volume utile de la cuve, lequel, afin d'être minimisé, a impliqué le recours à la transmission épicycloïdale mentionnée.

### Buts de l'invention

Un des buts de la présente invention vise une bétonnière à laquelle la transmission du mouvement de l'organe moteur vers la cuve soit faite sans recours à aucune couronne extérieure dans la cuve et à laquelle la liaison de cet organe moteur soit faite directement au réducteur d'actionnement de la cuve, sans aucunes courroies ou poulies, en visant, de même, un réducteur à profil très bas et muni d'une telle orientation des arbres d'entrée et de sortie que le moteur et le réducteur restent très proches du bout de la cuve et n'augment pas significativement le risque de collision, lors du basculement de la cuve de la bétonnière, notamment avec un chariot qu'on trouve sous la cuve.

Un autre but, d'ailleurs rapporté au bas profil du réducteur, c'est que celui-ci aie une constitution trop simple et un nombre de composants très bas, notamment en partageant plusieurs éléments avec le moteur et avec l'organe à actionner, étant, alors, très compact.

D'autres buts découleront de la lecture de la présente description, ainsi que des revendications.

### Description de l'invention

Selon la présente invention les buts sont atteints au moyen d'un réducteur de transmission mécanique - comprenant un corps, une vis sans fin et une roue à denture creuse - qui se caractérise par ne posséder, lui-même, aucun arbre ou aucun roulement ou palier, l'arbre de support de la vis sans fin étant l'arbre du moteur (30) et l'arbre de la roue à denture creuse étant l'arbre de l'organe extérieur à actionner, lequel, au cas des bétonnières, est l'arbre de la cuve.

Alors, au réducteur selon l'invention, la roue à denture creuse n'est pas supportée sur le corps, celui-ci étant ouvert du côté de la dite roue à denture creuse et le support de l'arbre de l'organe extérieur à actionner servant de couvercle au corps mentionné, en étanchant le réducteur.

En outre, au réducteur selon l'invention, le corps n'est pourvu que d'un point d'appui pour un roulement d'appui de l'arbre du moteur/vis sans fin et ledit corps est pourvu d'une bride de liaison au moteur, cette bride remplaçant le traditionnel couvercle du moteur.

La bétonnière se caractérise en ce qu'elle a un réducteur comme déjà décrit, monté sur la partie centrale de son bras basculant - en forme de «U» - et directement lié à l'arbre de la cuve.

Selon une forme préférée d'exécution de la présente invention, le moteur assume une position substantiellement parallèle à la partie centrale du bras en forme de «U».

En face des caractéristiques du réducteur de l'invention, on vérifie qu'il est plus compact, notamment au niveau du corps, que les traditionnels et qu'il dispose d'un nombre plus petit de pièces mobiles et, alors, d'un nombre plus petit de pièces sujettes à la consumation, et qu'il dispose encore d'un nombre plus petit de points de machination. De plus, il ne nécessite pas d'éléments autonomes, notamment d'accouplements individuels, soit à la liaison à l'organe moteur, soit à la liaison à l'organe à actionner. Tout cela se traduit par un moindre coût de production et de montage. A son tour, la bétonnière selon l'invention, en jouissant de ces avantages, permet l'actionnement direct de la cuve sans nécessité d'une couronne et si peu d'une courroie ou d'un élément équivalent de transmission du moteur vers le réducteur, sans, pourtant, augmenter significativement le risque de collision, lors du basculement de la cuve, entre ce moteur ou le réducteur et les objets qui se trouvent proches de la bétonnière, notamment un chariot resté au-dessous ce celle-ci.

### Brève description des figures

Les figures en annexe, présentées à titre simplement illustratif et pas limitatif, permettent de mieux comprendre la présente invention, ainsi que les principales différences par rapport à une solution de l'arrière-plan de la technique.

La figure 1 représente, d'une façon schématique, en perspective explosée, un réducteur selon l'invention.

La figure 2 représente schématiquement, aussi en perspective, ce même réducteur, après le montage.

La figure 3 représente, d'une façon simplifiée, une perspective latérale postérieure d'une bétonnière selon l'invention, munie d'un réducteur également selon l'invention, à la transmission du mouvement de rotation à la cuve, et d'un autre réducteur, aussi selon quelques-unes des caractéristiques de l'invention, à la transmission du mouvement de basculement au bras basculant de support de la cuve, en permettant encore d'identifier les areas correspondantes aux ampliations représentées aux figures 4 et 5. Dans la désignation de la perspective on a pris par vue frontale la vue correspondante au placement d'un ouvrier tourné vis-à-vis l'embouchure de la cuve.

Les figures 4 et 5 représentent des vues amplifiées en perspective, respectivement, de l'area du volant d'actionnement manuel du basculement du bras basculant de support de la cuve et de l'area du réducteur et du moteur d'actionnement du mouvement de rotation de la cuve autour de son axe.

### Description détaillée de l'invention

La description complémentaire de l'invention est maintenant faite avec référence aux figures citées, où les divers éléments se trouvent référenciés de la façon suivante:
- Bétonnière 1;
- Bâti 2;
- Bras basculant 3;
   - Moteur 30;
   - Arbre 31;
   - Roulement 34 ;
   - Réducteur 35;
   - Corps 36;
   - Vis sans fin 38;
   - Roue à denture creuse 39;
- Cuve/organe extérieur à actionner 4;
   - Arbre 40;
   - Couvercle/support 42.

Comme on vérifie au moyen des figures 1 et 2 qui représentent une configuration particulaire du réducteur (35) en cause, celui-ci est constitué d'un corps qui, d'un côté, définit une bride de liaison au moteur (30) - visible à la figure 3 - et un siège pour un roulement (34) d'appui de la vis sans fin (38) qui est l'arbre (31) lui-même du moteur. Le corps (36) est ouvert du côté de la roue à denture creuse (39), laquelle est enveloppée par ce corps mais ne dispose d'aucun point d'appui sur ce corps, étant fixée directement sur l'arbre (40) de la cuve (4), cet arbre étant soutenu sur le support (42) qui sert simultanément de couvercle au corps. De préférence, la fixation du couvercle (42) au corps (36) est faite au moyen de vis et le même arrive à la fixation du moteur à ladite bride, laquelle sert comme couvercle au moteur.

La fixation du moteur (30) à la bride et le roulement (34) assurent le centrage de l'arbre/vis sans fin (31, 38), pendant que le centrage de la roue à denture creuse est assuré par son placage dans l'arbre (40).

A son tour, les figures 3 et 5 démontrent l'application de ce réducteur (35) sur une bétonnière (1).

Sur une bétonnière, l'application de ce type de réducteur (35) au mouvement de la cuve est spécialement indiquée, due à son bas poids et forme compacte.

Le réducteur (35) est appliqué sur l'arbre (40) de la cuve (4), étant vissé au cube de support (42) de l'arbre de la cuve (4).

Sans préjudice de que le réducteur du type mentionné puisse être utilisé dans d'autres types d'applications ou d'appareils, il se trouve bien adapté à l'application concrète sur les bétonnières, soit en termes des efforts à subir, soit en termes de l'adéquation aux vélocités typiques d'entrée et de sortie, de l'ordre de 1500rpm environ sur celle-là et de 25rpm environ sur celle-ci, laquelle constitue la vélocité idéale au mélange du béton sur des cuves de la grandeur traditionnelle dans ce type de bétonnières.

Ce type de réducteur compact, appliqué sur la bétonnière, permet d'éliminer, d'une façon efficace et simple, la classique transmission par pignon qui a comme inconvénients son bruit de fonctionnement et le danger d'écrasement, en permettant une plus facile certification du produit dans le contour des règles communautaires.

Ce type de réducteur peut aussi être appliqué au basculement de la cuve (4), selon la figure 4, l'arbre du bras (3) étant appliqué sur la roue à denture creuse et - au cas de l'actionnement manuel - la vis sans fin étant liée à un volant (ou manivelle), soit directement, soit, de préférence, au moyen d'un pair de pignons coniques permettant de disposer l'axe de rotation du volant parallèlement à l'axe de basculement dudit bras (3). Cela permet une plus grande légèreté à l'actionnement, même au cas de l'actionnement manuel, ainsi que l'élimination du frein existant sur les bétonnières traditionnelles, en supprimant, de cette façon, le risque associé à l'incorrecte manipulation de ceci.

Malgré le fait que dans l'exemple décrit, le sans fin (38) et l'arbre (31) du moteur (30) soient un seul composant, il est manifeste qu'il pourrait s'agir de deux pièces distinctes, la vis sans fin étant liée à l'arbre dudit moteur, selon quelque méthode conventionnel.

Malgré le fait que le réducteur selon l'invention aie provenu d'une conception motivé par une application concrète sur des bétonnières, les caractéristiques de simplicité et le caractère compact de ce réducteur le rendent aussi adéquat à l'application sur d'autre type d'appareils, où on exige une transmission mécanique avec réduction de vélocité, étant le dimensionnement en termes de puissance et de vélocités d'entrée et de sortie des tâches manifestement du domaine des connaissances générales de l'homme du métier.

## Revendications

1. Réducteur de transmission mécanique (35) comprenant un corps (36), une vis sans fin (38) et une roue à denture creuse (39), **caractérisé par** ne posséder, lui-même, aucun arbre ou aucun roulement ou palier, l'arbre (31) de support de la vis sans fin étant l'arbre du moteur (30) et l'arbre de la roue à denture creuse (39) étant l'arbre (40) de l'organe extérieur à actionner (4).

2. Réducteur selon la revendication antérieure, **caractérisé en ce que** la roue à denture creuse (39) n'est pas supportée sur le corps (36.

3. Réducteur selon la revendication antérieure, **caractérisé en ce que** le corps (36) est ouvert du côté de la dite roue à denture creuse (39) et le support (42) de l'arbre (40) de l'organe extérieur à actionner (4) sert de couvercle au corps mentionné, en étanchant le réducteur.

4. Réducteur selon la revendication 1, **caractérisé en ce que** le corps (36) n'est pourvu que d'un point d'appui pour un roulement (34) d'appui de l'arbre du moteur/vis sans fin (31, 38).

5. Réducteur selon la revendication antérieure, **caractérisé en ce que** le corps est pourvu d'une bride de liaison au moteur (30), laquelle remplace le traditionnel couvercle du moteur.

6. Bétonnière (1) **caractérisée en ce qu'**elle a un réducteur (35), selon quelqu'une des revendications antérieures, monté sur la partie centrale de son bras basculant (3) en forme de «U» et directement lié à l'arbre (40) de la cuve (4).

7. Bétonnière selon la revendication antérieure, **caractérisée en ce que** le moteur (30) assume une position substantiellement parallèle à la partie centrale du bras (3) en forme de «U».

8. Bétonnière selon quelqu'une des revendications 6 ou 7, **caractérisée en ce que** le mouvement basculant du bras (3) est actionné au moyen d'un réducteur de transmission mécanique de vis sans fin/roue à denture creuse, notamment selon quelqu'une des revendications 1 ou 2, et manuellement ou à moteur, en ce cas-ci possédant une bride de liaison au moteur et, en ce cas-la, étant actionné par un volant ou une manivelle lié au respectif arbre/vis sans fin, notamment au mayen d'un pair de pair de pignons coniques.
